Europäisches Patentamt

European Patent Office

Office européen des brevets

(19)

(11) Veröffentlichungsnummer: **0 322 532**
**B1**

(12) **EUROPÄISCHE PATENTSCHRIFT**

(45) Veröffentlichungstag der Patentschrift: 30.01.91

(51) Int. Cl.⁵: **G 01 C 21/16,** G 01 P 7/00

(21) Anmeldenummer: **88117617.6**

(22) Anmeldetag: **22.10.88**

(54) **Gerät zur Bestimmung der Geschwindigkeit von Fahrzeugen.**

(30) Priorität: **24.12.87 DE 3744159**

(43) Veröffentlichungstag der Anmeldung:
**05.07.89 Patentblatt 89/27**

(45) Bekanntmachung des Hinweises auf die
Patenterteilung:
**30.01.91 Patentblatt 91/05**

(84) Benannte Vertragsstaaten:
**DE FR GB SE**

(56) Entgegenhaltungen:
**DE-A-2 818 202**
**DE-A-2 922 415**
**DE-A-3 143 234**

(73) Patentinhaber: **Bodenseewerk Gerätetechnik GmbH**
**Alte Nussdorfer Strasse 15 Postfach 1120**
**D-7770 Überlingen/Bodensee (DE)**

(72) Erfinder: **Boch, Wolfgang,**
**36 Brühlstrasse**
**D-7777 Salem-Mimmenhausen (DE)**
Erfinder: **Krogmann, Uwe**
**24 Zur Aessche**
**D-7770 Ueberlingen-Nussdorf (DE)**

(74) Vertreter: **Wolgast, Rudolf, Dipl.-Chem. Dr. et al**
**Dipl.-Phys. Jürgen Weisse Dipl.Chem. Dr. Rudolf**
**Wolgast Bökenbusch 41 Postfach 11 03 86**
**D-5620 Velbert 11 Langenberg (DE)**

Courier Press, Leamington Spa, England.

# EP 0 322 532 B1

**Beschreibung**

Die Erfindung betrifft ein Gerät zur Bestimmung der Geschwindigkeit eines Fahrzeugs, enthaltend

(a) einen Beschleunigungsmesser zur Erzeugung eines die Längsbeschleunigung des Fahrzeugs wiedergebenden Längsbeschleunigungssignals,

(b) einen Lagesensor, der ein die Längsneigung des Fahrzeugs wiedergebendes Längsneigungssignal liefert,

(c) Kompensationsmittel, auf welche das besagte Längsbeschleunigungssignal und das Längsneigungssignal aufgeschaltet sind zur Erzeugung eines hinsichtlich des Schwerebeschleunigungsanteils korrigierten Längsbeschleunigungssignals,

(d) Integrationsmittel zur Integration des Längsbeschleunigungssignals und zur Erzeugung eines inertialen Geschwindigkeitssignals,

(e) einen Längsgeschwindigkeitssensor zur Erzeugung eines die Geschwindigkeit des Fahrzeugs gegenüber Grund wiedergebenden Übergrundgeschwindigkeitssignals,

(f) einen Schätzer, auf den das besagte inertiale Geschwindigkeitssignal und das besagte Übergrundgeschwindigkeitssignal aufgeschaltet sind zur Erzeugung einer Ausgangsgröße für die Korrektur des Übergrundgeschwindigkeitssignals und

(g) Korrekturmittel zum Korrigieren des besagten Übergrundgeschwindigkeitssignals mit der besagten Ausgangsgröße des Schätzers.

Solche Geräte sind bekannt durch die DE—C3—28 18 202 und die DE—C2—29 22 415.

Bein den bekannten Geräten sind die Schätzer Kalman-Filter. Die Ausgangsgröße des Schätzers ist ein Schätzwert für den zeitlich veränderlichen Fehler des Übergrundgeschwindigkeitssignals. Die Korrekturmittel subtrahieren diesen Fehler von der gemessenen Übergrundgeschwindigkeit.

Die Übergrundgeschwindigkeit wird bei Landfahrzeugen durch einen üblichen elektromechanischen Geschwindigkeitsgeber gemessen. Diese gemessene Übergrundgeschwindigkeit ist mit einem Fehler behaftet, der insbesondere durch Schlupf zwischen den Rädern oder Ketten des Fahrzeugs und dem Boden hervorgerufen wird. Auch die von einem Beschleunigungsmesser gemessene Längsbeschleunigung ist mit Fehlern behaftet, die man durch einen Skalenfaktorfehler und durch einen Nullpunktfehler beschreiben kann. Außerdem wirkt auf den Beschleunigungsmesser noch ein von der Neigung des Fahrzeugs gegenüber der Horizontalebene abhängiger Anteil der Erdbeschleunigung. Durch Messung der Lagewinkel aus den Signalen von Wendekreiseln kann dieser Anteil bestimmt und berücksichtigt werden. Es ergibt sich dabei eine recht komplizierte Struktur des Kalman-Filters. Normalerweise benötigt man ein Kalman-Filter neunter Ordnung. Da die Bestimmung der Geschwindigkeit praktisch in Echtzeit erfolgen muß, wird hierfür ein Rechner mit hoher Speicher- und Rechenkapazität mit einem sehr komplexen Programm benötigt. Das Gerät wird daher sehr aufwendig.

Es sind Schätzer bekannt, die einen linearen Zusammenhang zwischen abhängigen und unabhängigen Variablen mit konstanten Parametern voraussetzen und aus Meßwerten der abhängigen und unabhängigen Variablen die unbekannten Parameter nach der Methode der kleinsten Fehlerquadrate bestimmen (DE-Zeitschrift "Regelungstechnik und Prozeß-Datenverarbeitung" Verlag R. Oldenbourg, München, 22 (1974), Seiten 1—32).

Die DE—A1—31 43 234 beschreibt ein Navigationsverfahren mit einem Weggeber und einem Lotfühler. Der Lotfühler erfasst die Abweichung der Fahrzeughochachse von der Vertikalen und korrigiert somit die von dem Weggeber erhaltenen Wegsignale hinsichtlich des Neigungswinkels. Aus dem Wegsignal und einem vom einem Kurskreisel gelieferten Kurswinkel wird die Fahrzeugposition berechnet. Es wird dabei auch der Schlupf berücksichtigt. Bei einer Ausführung werden durch Differentiation des Weggebersignals die Geschwindigkeit und die Beschleunigung des Fahrzeugs bestimmt. Die so bestimmte Beschleunigung wird mit einer inertialen Beschleunigung verglichen, welche von dem Lotfühler gemessen wird. Aus der Differenz der Beschleunigung wird ein Schlupffaktor ermittelt.

Der Erfindung liegt die Aufgabe zugrunde, bei einem Gerät der eingangs genannten Art die erforderliche Speicher- und Rechnerkapazität zu verringern.

Erfindungsgemäß wird diese Aufgabe dadurch gelöst, wie in kennzeichnenden Teil des Anspruchs 1 festgehalten.

Es wird also nach der Erfindung nicht ein Kalman-Filter benutzt wie bei der zum Stand der Technik genannten DE—C3—28 18 202 und der DE—C2—29 22 415 sondern ein Parameterschätzer, der nach der Methode der kleinsten Fehlerquadrate einen konstanten Parameter schätzt. Dementsprechend wird nicht der variable Geschwindigkeitsfehler geschätzt wie bei den genannten Druckschriften, sondern ein zumindest näherungsweise über ein Meßintervall konstanter Schlupffaktor. Mit einem so bestimmten Schlupffaktor wird die von einem Geschwindigkeitssensor, z.B. einem mit den Rädern oder Ketten des Fahrzeugs gekuppelten, elektromechanischen Geschwindigkeitsmesser, gemessene Geschwindigkeit dividiert bzw. korrigiert. Es wird dabei ein Parameterschätzer dritter Ordnung benötigt. Der Rechneraufwand wird dadurch gegenüber den bekannten Geräten erheblich vermindert.

Bei der DE—C2—29 22 415 wird eine Nickrate des Fahrzeuges und damit die Neigung der Empfindlichkeitsachse des Beschleunigungsmessers gegenüber der Horizontalen aus den Winkelgeschwindigkeiten um alle drei Fahrzeugachsen bestimmt. Simulationen haben gezeigt, daß es jedenfalls bei Landfahrzeugen ausreicht, nur die Winkelgeschwindigkeit um die Nichachse des Fahrzeugs zu bestimmen. Auch das vermindert den erforderlichen Rechneraufwand.

Der Schlupffaktor kann sich natürlich im Verlauf der Fahrt ändern, wenn der Boden sich ändert. Dem kann dadurch Rechnung getragen werden, daß der Schätzungsvorgang periodisch wiederholt wird. Es wird also nicht durch ein Kalman-Filter eine variable Größe wie der Geschwindigkeitsfehler geschätzt, sondern es erfolgt eine Schätzung eines innerhalb eines Meßintervalles im wesentlichen konstanten Parameters, die aber wiederholt durchgeführt wird.

Das Zeitintervall für die Durchführung der Schätzung kann variabel sein. Dadurch kann erreicht werden, daß in diesem Zeitintervall eine solche Änderung der Geschwindigkeit auftritt, daß eine hinreichend genaue Schätzung möglich ist.

Ein Ausführungsbeispiel der Erfindung ist nachstehend unter Bezugnahme auf die zugehörigen Zeichnungen näher erläutert.

Fig. 1 ist ein Blockdiagramm und zeigt die Struktur eines Gerätes zur Bestimmung der Geschwindigkeit eines Fahrzeugs aus einem unmittelbar von einem Geschwindigkeitssensor erhaltenen, schlupfbehafteten Übergrundgeschwindigkeitssignal und einem inertialen Geschwindigkeitssignal mittels eines Parameterschätzers.

Fig. 2 veranschaulicht die Algorithmen des Parameter-schätzers.

Fig. 3 veranschaulicht den angewandten (an sich bekannten) Rekursionsalgorithmus des Parameter-schätzers.

Mit 10 ist ein Geschwindigkeitsmesser bezeichnet, der die Längsgeschwindigkeit des Fahrzeugs mißt. Der Geschwindigkeitsmesser 10 ist ein üblicher elektro-mechanischer Geschwindigkeitsmesser, der die Drehgeschwindigkeit eines Rades in einen Geschwindigkeitsmeßwert umsetzt. Ein solcher Geschwindigkeitsmeßwert ist mit einem Fehler behaftet, der auf den Schlupf zwischen Rad bzw. Kette bei Kettenfahrzeugen und Boden zurückzuführen ist.

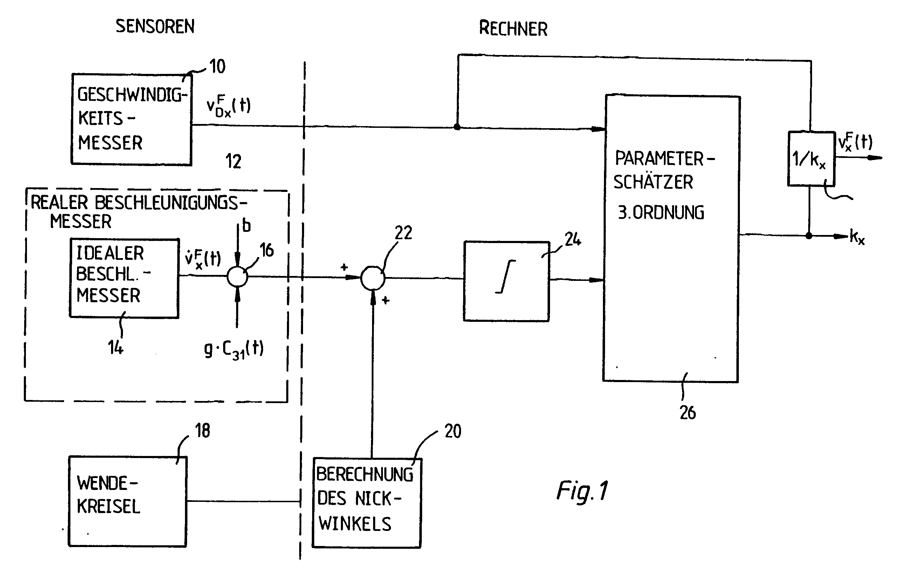

Ein zweiter Sensor ist ein Beschleunigungsmesser 12. Auch dieser Beschleunigungsmesser 12 hat systematische Fehler. In Fig. 1 ist der "reale" Beschleunigungsmesser 12 dargestellt durch einen "idealen" Beschleunigungsmesser 14, dessen Signal aber durch einen Nullpunktfehler b und durch einen Anteil der Erdbeschleunigung g verfälscht ist. Der an dem Beschleunigungsmesser 12 wirksam werdende Anteil der Erdbeschleunigung g hängt von der Neigung der Fahrzeuglängsachse gegen die Horizontale ab. Diese Neigung kann durch das Element $C_{31}$ der Richtungskosinusmatrix angegeben werden. Dieses Element $C_{31}$ ist gleich dem negativen Sinus des Nickwinkels. Der am Beschleunigungsmesser 12 wirksam werdende Anteil der Erdbeschleunigung ist daher $-g\ C_{31}$. Die beiden Fehler b und $-g\ C_{31}$ sind in einem Summationspunkt 16 dem Ausgang $v_x^F(t)$ des "idealen" Beschleunigungsmessers 14 überlagert.

Ein dritter Sensor ist ein fahrzeugfester Wendekreisel 18, der ein Winkelgeschwindigkeitssignal nach Maßgabe der Winkelgeschwindigkeit um die Nickachse des Fahrzeugs liefert.

Aus dem Signal des Wendekreisels 18 wird durch Integration ein Schätzwert $\hat{C}_{31}$ für das Element $C_{31}$ der Richtungskosinusmatrix erhalten, und dieser Schätzwert wird mit der Erdbeschleunigung g multipliziert. Das ist durch Block 20 dargestellt. Es wird so ein Korrekturwert $g\ \hat{C}_{31}$ erhalten, der in einem Summationspunkt dem Ausgangssignal $a_x^F(t)$ des "realen" Beschleunigungsmessers 12 überlagert wird. Es wird dadurch ein Beschleunigungssignal $v_{Ix}(t)$ erhalten, das die hinsichtlich der Erdbeschleunigung korrigierte Newtonsche Beschleunigung wiedergibt. Dieses inertiale Beschleunigungssignal wird integriert, wie durch Block 24 dargestellt ist. Dadurch wird die in dem Integrationsintervall eingetretene Änderung $\Delta v_{Ix}^F$ der inertial gemessenen Geschwindigkeit erhalten.

Die im Integrationsintervall eingetretene Änderung $\Delta v_{Ix}^F$ der inertial gemessenen Geschwindigkeit und die von dem Geschwindigkeitsmesser gemessene Geschwindigkeit $v_{Dx}(t)$ werden auf einen nach der Methode der kleinsten Fehlerquadrate arbeitenden Parameterschätzer 26 von dritter Ordnung aufgeschaltet. Der Parameterschätzer 26 liefert einen Schätzwert $\hat{k}_x$ für den Schlupffaktor. Die von dem Geschwindigkeitsmesser 10 gemessene Geschwindigkeit, nämlich $v_{Dx}(t)$, wird durch diesen Schlupffaktor $\hat{k}_x$ dividiert, wie durch Block 28 dargestellt ist. Das ergibt einen optimalen Schätzwert für die schlupfkorrigierte Geschwindigkeit des Fahrzeugs.

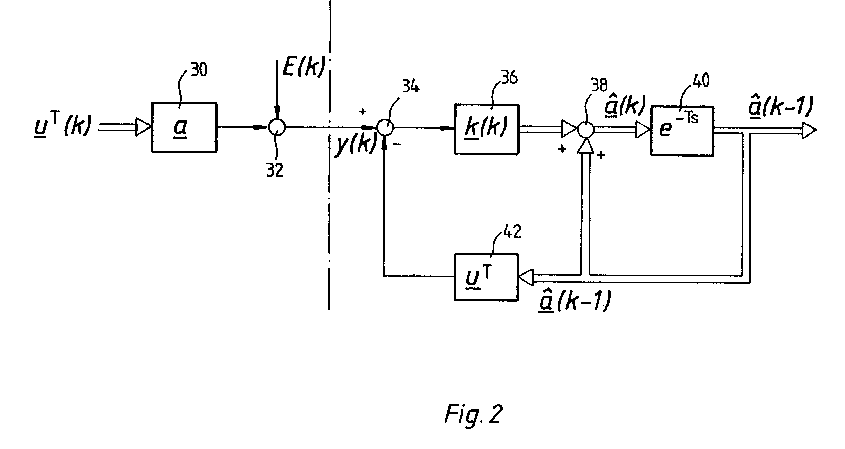

Fig. 2 zeigt in Blockdarstellung den Parameterschätzer 26. Der Parameterschätzer 26 erhält einen Zeittakt $t_k$, die Geschwindigkeit $v_{Dx}(t_k)$ vom Geschwindigkeitsmesser 10 und die inertial gemessene Geschwindigkeitsänderung $\Delta v_{Ik}^F(t_k)$. Der Parameterschätzer liefert einen Parametervektor mit den Komponenten $1/k_x(t_k)$, $\hat{v}_{x(0)}^F(t_k)$ und $(b\ +\ g\ dC_{31})t_k$. Das sind also Schätzwerte für den reziproken Schlupffaktor, die Anfangsgeschwindigkeit des Fahrzeugs, so wie sie sich nach der Schätzung im Zeitpunkt $t_k$ ergibt, und die Kombination von Nullpunktfehler und Fehler des geschätzten Schwerkraftanteils. Anfangswerte für den Parametervektor $a_0$ und $P_0$, was noch erläutert wird, werden vorgegeben.

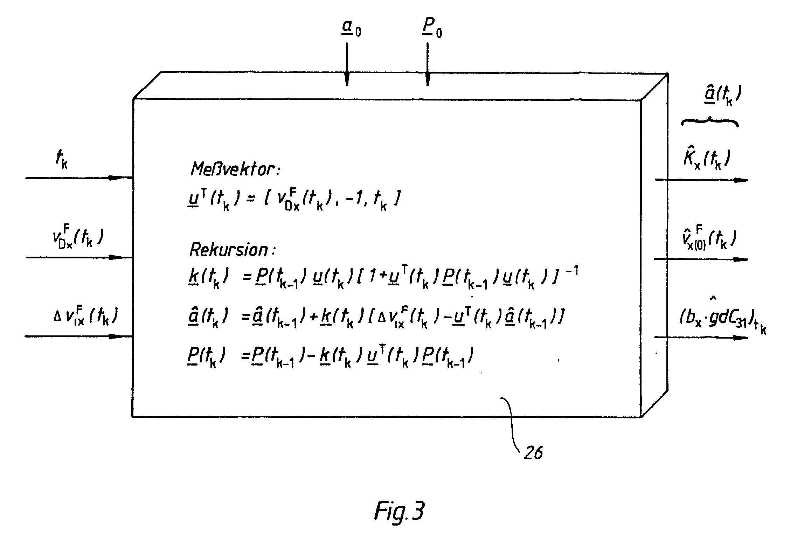

Fig. 3 zeigt schematisch die an sich bekannte Struktur des Parameterschätzers 26 mit einem Rekursionsalgorithmus nach der Methode der kleinsten Quadrate.

Links von der strichpunktierten, vertikalen Linie ist ein lineares, statisches Modell des Systems dargestellt. Ein Meßvektor $u^T(k)$ wird mit einem Parametervektor $a$ mit konstanten Parametern multipliziert, was durch Block 30 dargestellt ist. Der erhaltenen Größe ist das Meßrauschen E (k) überlagert, wie durch Summationspunkt 32 dargestellt ist. Das ergibt eine Meßgröße y(k) für den Takt "k". Das ist die "reale Welt". Die physikalische Meßgröße y(k) ist die Ausgangsgröße der realen Welt.

In dem Parameterschätzer 26, rechts von der strichpunktierten Linie, wird im Summationspunkt 34 die Differenz aus der physikalischen Meßgröße y(k) und dem zugehörigen Schätzwert $u^T(k)\,\hat{a}(k\text{-}1)$ gebildet. Diese Differenz

$$y(k) - u^T(k)\hat{a}(k\text{-}1)$$

wird mit Verstärkungen K(k) gewichtet, was durch Block 36 dargestellt ist. Daraus ergibt sich ein Korrekturwert für den Parameterschätzwert. Dieser Korrekturwert wird im Summationspunkt 38 an dem im vorhergehenden Zeitintervall geschätzten Parametervektor $\hat{a}(k\text{-}1)$ angebracht. Dadurch wird ein korrigierter Schätzwert für den Parametervektor $\hat{a}(k)$ erhalten. Der Schätzwert $\hat{a}(k\text{-}1)$ aus dem vorhergehenden Zeitintervall war in einem Register 40 gespeichert und wird im laufenden Zeitintervall durch den neuen, korrigierten Meßwert $\hat{a}(k)$ ersetzt. Der gespeicherte Parametervektor $\hat{a}(k\text{-}1)$ wird mit dem Meßvektor $u^T$ multipliziert, wie durch Block 42 angedeutet ist. Das ergibt den zweiten Term in der oben angegebenen Differenz.

Angewandt auf das vorliegende Problem ergibt das folgendes:

Es ist

$$a_x{}^F(t) = \dot{v}_x{}^F(t) - g\,C_{31}(t) + b_x{}^F. \qquad (1)$$

Dabei ist
$a_x{}^F(t)$ die Meßgröße des realen Beschleunigungsmessers,
$\dot{v}_x{}^F(t)$ die wahre Fahrzeugbeschleunigung,
$gC_{31}(t)$ der lageabhängige Anteil $-g\sin\theta$ der Schwerebeschleunigung, der an dem Beschleunigungsmesser wirksam wird, wobei g die Schwerebeschleunigung und $\theta$ der Neigungswinkel des Fahrzeugs ist,
Wenn mit $k_x$ der Schlupffaktor bezeichnet wird, dann ist

$$v_{Dx}{}^F(t) = k_x\,v_x{}^F(t). \qquad (2)$$

Dabei ist
$v_{Dx}(t)$ die von dem elektromechanischen Geschwindigkeitsmesser gemessene Geschwindigkeit,
$v_x{}^F(t)$ die wahre Fahrzeuggeschwindigkeit und
$k_x$ der Schlupffaktor.
Wird das Meßsignal $a_x{}^F(t)$ des Beschleunigungsmessers 12 um den durch den Parameterschätzer berechneten Gravitationsanteil $\hat{g}C_{31}(t)$ kompensiert, so ergibt sich aus Gleichung (1) die folgende Gleichung (3):

$$a_x{}^F(t) + g\,\widehat{C}_{31}(t) = v_x{}^F(t) + g\,(\widehat{C}_{31}(t) - C_{31}(t)) + b_x{}^F.$$

Darin stellen die Terme auf der linken Seite der Gleichung die mit dem geschätzten $\hat{C}_{31}$ gemessene Newtonsche Beschleunigung dar:

$$a_x{}^F(t) + g\,\widehat{C}_{31}(t) = \dot{v}_{Ix}{}^F(t) \qquad (3A)$$

Die Integration der Gleichung (3) in einem Zeitintervall von $t_A$ bis $t_E$ ergibt als Gleichung (4):

$$\int_{t_A}^{t_E} \dot{v}_{Ix}{}^F(t)\,dt = \int_{t_A}^{t_E} (\dot{v}_x{}^F(t) + b_x{}^F + g\,dC_{31}(t))dt.$$

Darin ist $dC_{31}(t) = \hat{C}_{31}(t) - C_{31}(t)$ der Fehler des Schätzwertes für das Matrixelement $C_{31}$. Es wird angenommen, daß der Ausdruck $b_x{}^F + dC_{31}(t)$ während des Integrationsintervalls konstant ist. Das Integrationsintervall ist das Zeitintervall, während welches die Bestimmung der Schätzwerte der als konstant angesehenen Parameter durch den Parameterschätzer erfolgt. Bezeichnet man $t_E - t_A$ als t, dann wird aus Gleichung (4):

$$v_{Ix}{}^F(t) = (1/k_x)\,v_{Dx}{}^F(t) - v_x{}^F(0) + (b_x{}^F + g\,dC_{31})t$$

4

Darin ist $v_x(t)$ die wahre Geschwindigkeit, $v_x^F(0)$ die wahre Anfangsgeschwindigkeit des Fahrzeugs zu Beginn der Integrations- oder Schätzintervalls. Wird gemäß Gleichung (2) eingesetzt

$$v_x^F(t) = (1/k_x) \ v_{DX}^F(t),$$

dann ergibt sich das physikalische Modell des Parameterschätzers 26 als Gleichung (7):

$$\Delta v_{Ix}^F(t) = (1/k_x) \ v_{Dx}^F(t) - v_x^F(0) + (b_x^F + g \ dC_{31}) \cdot t$$

Die inertial abgeleitete Geschwindigkeitsänderung, die durch Integration des um den Schwerebeschleunigungsanteil kompensierten Meßsignal des realen Beschleunigungsmessers erhalten wird, setzt sich zusammen aus der Differenz der wahren Momentangeschwindigkeit und der momentanen Anfangsgeschwindigkeit sowie aus den Fehleranteilen, nämlich dem aus dem Nullpunktfehler des Beschleunigungsmessers resultierenden Fehler und dem Fehler aus der Kompensation des Anteils der Schwerebeschleunigung. Man kann die Gleichung (7) in vektorieller Form als "Meßgleichung" des Parameterschätzers 26 schreiben:

$$\Delta V_{Ix}^F(t) = [\ V(t), -1, t\ ] \begin{bmatrix} 1/k_x \\ v_x^F(0) \\ (b_{Dx}^F + g \cdot dC_{31}) \end{bmatrix} + E(t)$$

$\Delta v_{Ix}^F(t)$ wird die Meßgröße y. Der Meßvektor $u^T$ hat die Komponenten $v_{Dx}^F(t)$, $-1$ und t. Der Parametervektor $a$ hat die Komponenten $1/k_x$, $v_x^F(0)$ und $(b_x^F + g \ dC_{31})$. Dazu kommt das Meßrauschen.

Für die Komponenten des Parametervektors können in jedem Schätzintervall, innerhalb dessen diese Komponenten als konstant angesehen werden, nach dem oben unter Bezugnahme auf Fig. 3 beschriebenen Algorithmus Schätzwerte gewonnen werden. Der Schätzwert $k_x$ des Schlupffaktors dient zur Korrektur des Geschwindigkeitsmeßwertes von dem Geschwindigkeitsmesser 10. Der Schätzwert für die Fehler von $b_x^F + g \ dC_{31}$ kann benutzt werden, um die Korrektur der gemessenen Beschleunigung im Summationspunkt 22 für das nächste Schätzintervall zu verbessern.

## Patentansprüche

1. Gerät zur Bestimmung der Geschwindigkeit eines Fahrzeugs, enthaltend

(a) einen Beschleunigungsmesser (12) zur Erzeugung eines die Längsbeschleunigung des Fahrzeugs wiedergebenden Längsbeschleunigungssignals,

(b) einen Lagesensor (18, 20), der ein die Längsneigung des Fahrzeugs wiedergebendes Längsneigungssignal liefert,

(c) Kompensationsmittel (22), auf welche das besagte Längsbeschleunigungssignal und das Längsneigungssignal aufgeschaltet sind zur Erzeugung eines hinsichtlich des Schwerebeschleunigungsanteils korrigierten Längsbeschleunigungssignals,

(d) Integrationsmittel (24) zur Integration des Längsbeschleunigungssignals und zur Erzeugung eines inertialen Geschwindigkeitssignals,

(e) einen Längsgeschwindigkeitssensor (10) zur Erzeugung eines die Geschwindigkeit des Fahrzeugs gegenüber Grund wiedergebenden Übergrundgeschwindigkeitssignals,

(f) einen Schätzer (26), auf den das besagte inertiale Geschwindigkeitssignal und das besagte Übergrundgeschwindigkeitssignal aufgeschaltet sind zur Erzeugung einer Ausgangsgröße für die Korrektur des Übergrundgeschwindigkeitssignals, und

(g) Korrekturmittel (28) zum Korrigieren des besagten Übergrundgeschwindigkeitssignals mit der besagten Ausgangsgröße des Schätzers, dadurch gekennzeichnet, daß

(h) der Schätzer (26) ein nach der Methode der kleinsten Fehlerquadrate in einem Zeitintervall (t) arbeitender Parameterschätzer dritter Ordnung ist, durch welchen aus dem Zusammenhang zwischen der Änderung des inertialen Geschwindigkeitssignals $(\Delta v_{Ix}^F(t))$ in dem Zeitintervall (t) und dem Übergrundgeschwindigkeitssignal $(v_{Dx}^F(t))$ die Parameter: Kehrwert des Schlupffaktors $(1/k_x)$, Anfangsgeschwindigkeit $(v_x^F(o))$ des Fahrzeugs und Summe $(b_{Dx}^F + g \ d \ C_{31})$ von Nullpunktfehler $(b_{Dx}^F)$ des Beschleunigungsmessers (12) und Fehler $(g \ d \ C_{31})$ am Beschleunigungsmesser (12) wirksamen Schwerebeschleunigungsanteils bestimmbar sind, wobei der Kehrwert des Schlupffaktors $(1/k_x)$ die besagte Ausgangsgröße des Schätzers (26) bildet, und

(i) die Korrekturmittel von Mitteln (28) zur Multiplikation des Übergrundgeschwindigkeitssignals $(v_{Dx}^F(t))$ mit dem von dem Schätzer (26) gelieferten Kehrwert $(1/k_x)$ des Schlupffaktors gebildet sind.

2. Gerät nach Anspruch 1, dadurch gekennzeichnet, daß der Schätzvorgang periodisch wiederholt wird.

3. Gerät nach Anspruch 1 oder 2, dadurch gekennzeichnet, daß das Zeitintervall für die Durchführung der Schätzung zeitlich variabel ist.

**Revendications**

1. Appareil déstiné à la détermination de la vitesse d'un véhicule, comprenant

(a) un accéléromètre (12) destiné à engendrer un signal d'accélération longitudinale représentant l'accélération longitudinale du véhicule,

(b) un détecteur de position (18, 20) fournissant un signal d'inclinaison longitudinale représentant l'inclinaison longitudinale du véhicule

(c) des moyens de compensation (22) auxquels ledit signal d'accélération longitudinale et le signal d'inclinaison longitudinale sont appliqués afin d'engendrer un signal d'accélération longitudinale corrigée à l'égard de la part de l'accélération terrestre,

(d) des moyens d'intégration (24) déstinés à intégrer le signal d'accélération longitudinale et à engendrer un signal de vitesse inertial,

(e) un détecteur de la vitesse longitudinale (10), déstiné à engendrer un signal de vitesse de surfond représentant la vitesse du véhicule relativement au fond,

(f) un estimateur (26) auquel ledit signal de vitesse inertial et ledit signal de vitesse de surfond sont appliqués afin d'engendrer une grandeur de sortie pour la correction du signal de vitesse de surfond, et

(g) des moyens de correction (28) déstinés à corriger ledit signal de vitesse de surfond de ladite grandeur de sortie de l'estimateur,

caractérisé par le fait que

(h) l'estimateur (26) est un estimateur de paramètre de troisième ordre opérant dans un intervalle (t) selon la méthode des moindres carrés et qui peut déterminer, à partir de la relation entre la variation du signal de vitesse inertial ($\Delta v_{Ix}F(t)$) dans l'intervalle (t) et le signal de vitesse de surfond ($v_{Dx}F(t)$), les paramètres: la valeur réciproque du facteur de glissement ($1/k_x$), la vitesse initiale ($v_xF(o)$) du véhicule et la somme ($b_{Dx}F - g\,d\,C_{31}$) de déviations résiduelles ($b_{Dx}F$) de l'accéléromètre (12) et l'erreur ($g\,d\,C_{31}$) de la part d'accélération terrestre agissant à l'accéléromètre (12), la valeur réciproque du facteur de glissement ($1/k_x$) formant ladite grandeur de sortie de l'estimateur (26), et

(i) les moyens de correction sont formés par des moyens (28) déstinés à la multiplication du signal de vitesse de surfond ($v_{Dx}F(t)$) avec la valeur réciproque ($1/k_x$) du facteur de glissement fournie par l'estimateur (26).

2. Appareil selon la revendication 1, caractérisé par le fait que le processus d'estimation est répété périodiquement.

3. Appareil selon la revendication 1 ou 2, caractérisé par le fait que l'intervalle pour l'exécution de l'estimation est variable dans le temps.

**Claims**

1. Device for determination of the speed of a vehicle, comprising

(a) an accelerometer (12) for generating a longitudinal acceleration signal representing the longitudinal acceleration of the vehicle,

(b) a position sensor (18, 20) which supplies a longitudinal inclination signal representing the longitudinal inclination of the vehicle,

(c) compensation means (22) to which said longitudinal acceleration signal and the longitudinal inclination signal are applied for generating a longitudinal acceleration signal corrected for the gravitational acceleration component,

(d) integration means (24) for integrating the longitudinal acceleration signal and for generating an inertial speed signal,

(e) a longitudinal speed sensor (10) for generating an overground speed signal representing the speed of the vehicle relative to ground,

(f) an estimator (26) to which said inertial speed signal and said overground speed signal are applied for generating an output quantity for the correction of the overground speed signal, and

(g) correction means (28) for correcting said overground speed signal by the said output quantity of the estimator,

characterized in that

(h) the estimator (26) is a parameter estimator of third order which operates in a time interval (t) according to the method of least error squares and which is arranged to determine, from the relation between the variation of the inertial speed signal ($V_{Ix}F(t)$) in the time interval (t) and the overground speed signal ($v_{Dx}F(t)$), the parameters: reciprocal value of the slip factor ($1/k_x$), initial speed ($v_x^F(0)$) of the vehicle and sum ($b_{Dx}^F + g\,d\,C_{31}$) of the residual deviation ($b_{Dx}^F$) of the accelerometer (12) and the error of $g\,d\,C_{31}$ of the gravitational acceleration component acting on the accelerometer (12), with the reciprocal value of the slip factor ($1/k_x$) forming said output quantity of the estimator (26), and

(i) the correction means are formed by means (28) for multiplying the overground speed signal $(v_{Dx}^{F}(t))$ by the reciprocal value of the slip factor $(1/k_x)$ supplied by the estimator (26).

2. Device as set forth in claim 1, characterized in that the estimation process is repeated periodically.

3. Device as set forth in claim 1 or 2, characterized in that the time interval for carrying out the estimation is variable in time.

Fig. 1

SENSOREN

RECHNER

GESCHWINDIG-KEITS-MESSER 10

REALER BESCHLEUNIGUNGS-MESSER

IDEALER BESCHL.-MESSER 14

WENDE-KREISEL 18

BERECHNUNG DES NICK-WINKELS 20

PARAMETER-SCHÄTZER 3.ORDNUNG 26

$v_{Dx}^F(t)$

12

$\dot{v}_x^F(t)$

b 16

$g \cdot C_{31}(t)$

22

24

$1/k_x$

$v_x^F(t)$

$k_x$

*Fig. 2*

$$\underline{a}_0 \qquad \underline{P}_0$$

$$\left.\begin{array}{c}\hat{\underline{a}}(t_k)\end{array}\right\}$$

$$\hat{K}_x(t_k)$$

$$\hat{v}^F_{x(0)}(t_k)$$

$$(\hat{b}_x \cdot gdC_{31})\big/_{t_k}$$

**Meßvektor:**

$$\underline{u}^T(t_k) = [\, v^F_{Dx}(t_k)\,,\, -1\,,\, t_k\,]$$

**Rekursion:**

$$\underline{k}(t_k) = \underline{P}(t_{k-1})\,\underline{u}(t_k)\,[\,1 + \underline{u}^T(t_k)\,\underline{P}(t_{k-1})\,\underline{u}(t_k)\,]^{-1}$$

$$\hat{\underline{a}}(t_k) = \hat{\underline{a}}(t_{k-1}) + \underline{k}(t_k)\,[\,\Delta v^F_{ix}(t_k) - \underline{u}^T(t_k)\,\hat{\underline{a}}(t_{k-1})\,]$$

$$\underline{P}(t_k) = \underline{P}(t_{k-1}) - \underline{k}(t_k)\,\underline{u}^T(t_k)\,\underline{P}(t_{k-1})$$

26

$$t_k$$

$$v^F_{Dx}(t_k)$$

$$\Delta v^F_{ix}(t_k)$$

*Fig.3*